(19) Europäisches Patentamt
European Patent Office
Office européen des brevets

(11) **EP 2 561 023 B1**

(12) # EUROPÄISCHE PATENTSCHRIFT

(45) Veröffentlichungstag und Bekanntmachung des Hinweises auf die Patenterteilung:
**10.06.2015 Patentblatt 2015/24**

(21) Anmeldenummer: **11712819.9**

(22) Anmeldetag: **30.03.2011**

(51) Int Cl.:
***C09D 175/04*** *(2006.01)*
***C09D 5/04*** *(2006.01)*
***C08G 18/62*** *(2006.01)*
***C08G 18/79*** *(2006.01)*
***C08G 18/28*** *(2006.01)*
***C08G 18/80*** *(2006.01)*
***C09D 133/14*** *(2006.01)*

(86) Internationale Anmeldenummer:
**PCT/EP2011/054921**

(87) Internationale Veröffentlichungsnummer:
**WO 2011/131461 (27.10.2011 Gazette 2011/43)**

(54) **BESCHICHTUNGSMITTEL MIT VERBESSERTER ABLAUFNEIGUNG**

COATING COMPOSITION HAVING IMPROVED RUN-OFF TENDANCY

COMPOSITIONS DE REVÊTEMENT AYANT TENDANCE AMÉLIORÉE À S'ÉCOULER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2010 DE 102010015675**

(43) Veröffentlichungstag der Anmeldung:
**27.02.2013 Patentblatt 2013/09**

(73) Patentinhaber: **BASF Coatings GmbH**
**48165 Münster (DE)**

(72) Erfinder:
- **GROENEWOLT, Matthijs**
  **48147 Münster (DE)**
- **NIEMEIER, Manuela**
  **48317 Drensteinfurt (DE)**

(74) Vertreter: **Leifert & Steffan**
**Patentanwälte**
**Burgplatz 21-22**
**40213 Düsseldorf (DE)**

(56) Entgegenhaltungen:
**WO-A1-2006/131314 WO-A1-2008/074491**
**DE-A1- 10 344 448**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft thermisch härtbare Beschichtungsmittel auf Basis aprotischer Lösemittel enthaltend Polyole (A) und Polyisocyanate (B) sowie harnstoffgruppenhaltige Verbindungen (H).

Die EP-A-1 273 640 beschreibt 2K-Beschichtungsmittel, bestehend aus einer Polyol-Komponente und einer Vernetzerkomponente, bestehend aus aliphatischen und/oder cycloaliphatischen Polyisocyanaten, wobei 0,1 bis 95 Mol-% der ursprünglich freien vorhandenen Isocyanatgruppen mit Bisalkoxylsilylamin umgesetzt sind. Diese Beschichtungsmittel können für die OEM-Serienlackierung eingesetzt werden und weisen eine gute Kratzbeständigkeit bei gleichzeitig guter Beständigkeit gegen Umwelteinflüsse auf. Jedoch neigen diese Beschichtungsmittel besonders stark zur Nachvernetzung, da der Umsatz beim thermischen Aushärten nach der Applikation ungenügend ist. Dies wirkt sich besonders auf die Witterungsstabilität negativ aus.

Die DE-A-100 60 327 beschreibt 1K-Beschichtungsmittel, die als Vernetzer blockierte Isocyanate enthalten, bei denen 1 bis 90 Mol-% der ursprünglich freien vorhandenen Isocyanatgruppen mit mindestens einem sekundären 3-Aminopropyltrialkoxysilan umgesetzt sind. Diese modifizierten blockierten Isocyanate verbessern die Kratzfestigkeit der resultierenden Beschichtungen. Ferner zeigen die modifizierten blockierten Isocyanate eine gegenüber den entsprechenden unmodifizierten Isocyanaten verbesserte Löslichkeit bzw. reduzierte Kristallisationsneigung.

Die WO 08/074491 beschreibt thermisch härtbare Beschichtungsmittel auf Basis aprotischer Lösemittel enthaltend Polyole und Polyisocyanate, bei denen ein Teil der Isocyanatgruppen mit einer Mischung aus einem Bisalkoxysilylamin (Ia), bevorzugt Bis-[3-(trimethoxysilyl)propyl]-amin, und einem Monoalkoxysilylamin (IIa), bevorzugt N-[3-(trimethoxysilyl)propyl]-butylamin, umgesetzt ist. Die Beschichtungsmittel führen zu hoch kratzfesten und säureresistenten Beschichtungen und es lassen sich Beschichtungen und Lackierungen, speziell Klarlackierungen, auch in Schichtdicken > 40 $\mu$m herstellen, ohne dass Spannungsrisse auftreten.

Diese aus der EP-A-1 273 640, DE-A-100 60 327 und der WO 08/074491 bekannten Beschichtungsmittel können übliche Rheologiehilfsmittel enthalten. Weitere Angaben, wie das bei höheren Schichtdicken auftretende Problem der Läuferneigung der Beschichtung beeinflusst werden kann, sind in den Schriften jedoch nicht enthalten.

Mit zunehmender Schichtdicke einer Beschichtung nimmt nämlich die Läuferneigung F zu, die proportional mit der dritten Potenz der Schichtdicke und der Viskosität zusammenhängt

$$F \sim d^3 / \eta$$

wobei d die Schichtdicke der Beschichtung und $\eta$ die Viskosität des Beschichtungsmittels ist.

Um daher bei gegebener Schichtdicke die Läuferneigung zu reduzieren, muss die Viskosität des Beschichtungsmittels erhöht werden. Andererseits besteht in der Industrie die Forderung, die gewünschten Zielschichtdicken mit möglichst wenigen Applikationsvorgängen zu erreichen, was gleichbedeutend ist mit einer erhöhten Schichtdicke pro Applikationsschritt. Im Bereich der Automobilindustrie und deren Zulieferindustrie werden insbesondere die Beschichtungsmittel für die farb- und/oder effektgebenden Beschichtungen mittels Spritzen appliziert, was zur Folge hat, dass die Viskosität der Beschichtungsmittel an der Auslassdüse relativ niedrig sein sollte.

Dieses geforderte Viskositätsverhalten der Lacke wird üblicherweise dadurch erhalten, dass den Beschichtungsmitteln Rheologiehilfsmittel zugesetzt werden. Hierbei haben sich insbesondere verschiedene Harnstoffderivate bewährt, die beispielsweise erhalten werden durch Umsetzung von 1,6-Hexamethylendiisocyanat mit Benzylamin oder mit Methoxypropylamin. Derartige Rheologiehilfsmittel sind beispielsweise in der DE-A-27 51 761, der EP-A-192 304 und der EP-A-198 519 beschrieben.

Eine Weiterentwicklung dieser Rheologiehilfsmittel sind Harnstoffderivate, die durch Umsetzung von 1,6-Hexamethylendiisocyanat mit chiralen Aminosäuren erhalten werden, wie dies in der WO 05/005558 beschrieben ist. Diese Harnstoffderivate haben eine verbesserte Oberflächenqualität der resultierenden Beschichtungen zur Folge.

Außerdem sind aus der WO02/098943 Beschichtungsmittel bekannt, die ein Rheologiehilfsmittel auf Harnstoff-Basis enthalten, welches erhältlich ist durch Umsetzung eines Diisocyanates mit der Mischung eines primären und/oder sekundären Diamins, wie beispielsweise Ethylendiamin, und eines primären und/oder sekundären Monoamins, wie beispielsweise n-Hexylamin oder Methoxypropylamin. Die aus diesen Beschichtungsmitteln erhaltenen Beschichtungen zeichnen sich durch verbesserte optische Eigenschaften aus. Die Verwendung silangruppenhaltiger Amine zur Herstellung der Rheologiehilfsmittel ist in der Schrift jedoch nicht beschrieben.

Schließlich sind in der WO06/1313 silanmodifizierte Harnstoffderivate und ihre Verwendung in silanvernetzenden Farben, Lacken und Beschichtungen beschrieben. Diese silanmodifizierten Harnstoffderivate werden erhalten durch stöchiometrische Umsetzung von Diisocyanaten mit primären oder sekundären Aminosilanen, bevorzugt durch stöchiometrische Umsetzung von Diisocyanaten mit primären Aminosilanen.

Diese als Rheologiehilfsmittel eingesetzten Harnstoffderivate werden üblicherweise in einem Bindemittel oder

einem Trägermaterial, beispielsweise einem Polyacrylatharz oder einem Polyesterharz, gefällt und dieses Material wird dann dem Beschichtungsmittel bzw. bei 2-Komponentenlacken dem Stammlack zugesetzt. Durch diese Rheologiehilfsmittel wird daher dem Beschichtungsmittel weiteres Bindemittel zugeführt, was unter Umständen zu Problemen, wie Unverträglichkeiten, führen kann. Alternativ müssten viele verschiedene Rheologiehilfsmittel mit jeweils an die Beschichtungsmittel angepassten Bindemitteln hergestellt und bevorratet werden.

Außerdem können in Beschichtungsmitteln, die bei niedrigen Temperaturen von maximal 90°C eingebrannt werden, nur sogenannte transparente Harnstoffderivate eingesetzt werden, da die opaken Typen zu Trübungen des Lackfilms führen. Schließlich sind insbesondere die neuartigeren, zu verbesserten Eigenschaften führenden Rheologiehilfsmittel recht teuere Produkte.

**Aufgabe**

Der vorliegenden Erfindung lag daher die Aufgabe zugrunde, Beschichtungsmittel zur Verfügung zu stellen, die auch ohne den Zusatz von bekannten Rheologiehilfsmitteln, z.B. auf Basis von Harnstoffderivaten, eine verbesserte Ablaufneigung aufweisen sollten, d.h. auch in höheren Schichtdicken > 40μm, insbesondere > 50 μm, applizierbar sein sollten, ohne dass Läufer mit einer Länge von >= 1 cm auftreten. Dabei sollten die Beschichtungsmittel auch bei Härtung bei niedrigen Temperaturen von maximal 90°C, wie sie im Bereich der Beschichtung von Kunststoffteilen, beispielsweise für Automobil-Anbauteile, oder im Bereich der Autoreparaturlackierung üblich sind, zu Beschichtungen von optisch sehr guter Qualität und hoher Transparenz führen.

Ferner sollten die Beschichtungsmittel - je nach Verwendungszweck - zu hochgradig kratzfesten und säureresistenten Beschichtungen führen. Weiterhin sollten sich die Beschichtungen und Lackierungen, speziell die Klarlackierungen, auch in Schichtdicken > 40 μm herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserienlackierung (OEM). Darüber hinaus sollen die neuen Beschichtungsmittel einfach und sehr gut reproduzierbar herstellbar sein und während der Lackapplikation keine ökologischen Probleme bereiten.

**Lösung der Aufgabe**

Im Lichte der obengenannten Aufgabenstellung wurden Beschichtungsmittel auf Basis aprotischer Lösemittel gefunden, enthaltend mindestens eine hydroxylgruppenhaltige Verbindung (A), mindestens eine, von der Verbindung (H) verschiedene, isocyanatgruppenhaltige Verbindung (B) sowie mindestens eine, von der Verbindung (B) verschiedene, harnstoffgruppenhaltige Verbindung (H), dadurch gekennzeichnet, dass

(i) die harnstoffgruppenhaltige Verbindung (H) mindestens eine Struktureinheit der Formel (I)

$$-NR'''-C(O)-N-X-SiR''_x(OR')_{3-x} \quad (I),$$
|
H

und zusätzlich mindestens eine weitere Struktureinheit aufweist, wobei diese weitere Struktureinheit

(a) mindestens eine Struktureinheit (II) der nachfolgenden Formel (II)

$$-NR'''-C(O)-N-X-SiR''_x(OR')_{3-x} \quad (II),$$
|
R

oder
(b) mindestens eine Struktureinheit (III) der nachfolgenden Formel (III)

$$-NR'''-C(O)-N(X-SiR''_x(OR')_{3-x})_n(X'-SiR''_y(OR')_{3-y})_m \qquad (III)$$

oder
(c) mindestens eine Struktureinheit (II) der Formel (II) und mindestens eine Struktureinheit (III) der Formel (III)

ist, und

(ii) die harnstoffgruppenhaltige Verbindung (H) erhältlich ist durch Umsetzung einer isocyanatgruppenhaltigen Verbindung (HG) mit aminogruppenhaltigen Verbindungen und

(iii) in der harnstoffgruppenhaltigen Verbindung (H) mehr als 90 Mol-% der ursprünglich in der isocyanatgruppenhaltigen Verbindung (HG) vorhandenen Isocyanatgruppen zu den Struktureinheiten (I) und (II) oder (I) und (III) oder (I) und (II) und (III) umgesetzt worden sind,

wobei in den Formeln (I), (II) und (III)

R''' = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

R, R'' = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

R' = Wasserstoff, Alkyl oder Cycloalkyl, wobei die Kohlenstoffkette durch nicht benachbarte Sauerstoff-, Schwefel- oder NRa-Gruppen unterbrochen sein kann,

X, X' = linearer und/oder verzweigter Alkyl- oder Cycloalkylrest mit 1 bis 20 Kohlenstoffatomen,

x = 0 bis 2, y = 0 bis 2 sowie n = 0 bis 2, m = 0 bis 2, m+n = 2 ist.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels auf Basis aprotischer Lösemittel gelöst werden konnten.

So ist es insbesondere überraschend, dass die erfindungsgemäßen Beschichtungsmittel auch ohne den Zusatz von bekannten Rheologiehilfsmitteln auf Basis von Harnstoffderivaten eine verbesserte Ablaufneigung aufweisen, d.h. auch in höheren Schichtdicken > 40μm, insbesondere > 50 μm, applizierbar sind, ohne dass Läufer mit einer Länge von >= 1 cm auftreten. Weisen die silangruppenhaltigen Verbindungen nämlich - wie in der WO 2008/074491 beschrieben - lediglich die Struktureinheiten (II) und/oder (III), nicht jedoch gleichzeitig auch die Struktureinheiten (I) auf, so zeigen die entsprechenden Beschichtungsmittel Newtonsches Fließverhalten und keine Strukturviskosität. Zur Erzielung einer Strukturviskosität ist in diesem Fall der Zusatz von üblicherweise eingesetzten Rheologiehilfsmitteln erforderlich.

Die üblicherweise eingesetzten Rheologiehilfsmittel werden aber bekanntermaßen durch Umsetzung von Isocyanaten mit Aminen, wie Benzylamin oder Methoxypropylamin, in Gegenwart von Bindemitteln hergestellt, da es ohne die Mitverwendung der Bindemittel bei der Herstellung der Rheologiehilfsmittel sonst zu einer Gelierung der Ansätze kommen kann. Durch diese Rheologiehilfsmittel wird daher dem Beschichtungsmittel weiteres Bindemittel zugeführt, was unter Umständen zu Problemen, wie Unverträglichkeiten, führen kann. Alternativ müssten viele verschiedene Rheologiehilfsmittel mit jeweils an die Beschichtungsmittel angepassten Bindemitteln hergestellt und bevorratet werden. Die erfindungsgemäß eingesetzten Verbindungen (H) sind dagegen problemlos auch ohne Bindemittel herstellbar, so dass sie in einer Vielzahl von Beschichtungsmitteln einsetzbar sind, ohne dass es zu Problemen, wie Unverträglichkeiten, führt.

Die erfindungsgemäß eingesetzten Verbindungen (H) zeigen dabei überraschenderweise eine gute rheologische Aktivität und sind gut in die unterschiedlichsten Beschichtungsmittel einarbeitbar.

Ferner ist es überraschend, dass die Beschichtungsmittel auch bei Härtung bei niedrigen Temperaturen von maximal 90°C, wie sie im Bereich der Beschichtung von Kunststoffteilen, beispielsweise für Automobil-Anbauteile, oder im Bereich der Autoreparaturlackierung üblich sind, zu Beschichtungen von optisch sehr guter Qualität und hoher Transparenz, führen.

Ferner können mit den erfindungsgemäßen Beschichtungsmitteln Beschichtungen erhalten werden, deren Kratzfestigkeit und Säureresistenz - je nach Verwendungszweck - gezielt eingestellt werden kann.

Weiterhin lassen sich die erfindungsgemäßen Beschichtungen und Lackierungen, speziell die Klarlackierungen, auch in Schichtdicken > 40 μm herstellen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden.

Die erfindungsgemäßen Komponenten können schließlich besonders einfach und sehr gut reproduzierbar hergestellt werden und bereiten bei der Lackapplikation keine signifikanten toxikologischen und ökologischen Probleme.

**Beschreibung der Erfindung**

**Die erfindungswesentliche harnstoffgruppenhaltige Verbindung (H)**

Zur Steuerung der rheologischen Eigenschaften und Erzielung einer Strukturviskosität der Beschichtungsmittel auf Basis aprotischer Lösemittel ist es erfindungswesentlich, dass die Beschichtungsmittel mindestens eine, von der Verbindung (B) verschiedene, harnstoffgruppenhaltige Verbindung (H) enthalten, wobei

(i) die harnstoffgruppenhaltige Verbindung (H) mindestens eine Struktureinheit der Formel (I)

$$-NR'''-C(O)-\underset{\displaystyle H}{\underset{|}{N}}-X-SiR''_x(OR')_{3-x} \quad (I),$$

und zusätzlich mindestens eine weitere Struktureinheit aufweist, wobei diese weitere Struktureinheit

(a) mindestens eine Struktureinheit (II) der nachfolgenden Formel (II)

$$-NR'''-C(O)-\underset{\displaystyle R}{\underset{|}{N}}-X-SiR''_x(OR')_{3-x} \quad (II),$$

oder
(b) mindestens eine Struktureinheit (III) der nachfolgenden Formel (III)

$$-NR'''-C(O)-N(X-SiR''_x(OR')_{3-x})_n(X'-SiR''_y(OR')_{3-y})_m \qquad (III)$$

oder
(c) mindestens eine Struktureinheit (II) der Formel (II) und mindestens eine Struktureinheit (III) der Formel (III)

ist,
und
(ii) die harnstoffgruppenhaltige Verbindung (H) erhältlich ist durch Umsetzung einer isocyanatgruppenhaltigen Verbindung (HG) mit aminogruppenhaltigen Verbindungen und
(iii) in der harnstoffgruppenhaltigen Verbindung (H) mehr als 90 Mol-% der ursprünglich in der isocyanatgruppenhaltigen Verbindung (HG) vorhandenen Isocyanatgruppen zu den Struktureinheiten (I) und (II) oder (I) und (III) oder (I) und (II) und (III) umgesetzt worden sind,

wobei in den Formeln (I), (II) und (III)

R''' = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R''' = Wasserstoff oder Alkyl, insbesondere mit 1 bis 6 Kohlenstoffatomen, besonders bevorzugt R''' = Wasserstoff,

R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R = Alkylrest oder Cycloalkylrest, insbesondere mit 1 bis 6 Kohlenstoffatomen,

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Alkylrest, insbesondere mit 1 bis 6 C-Atomen, ganz besonders R' = Ethyl und/oder Methyl,

X, X' = linearer und/oder verzweigter Alkyl oder Cycloalkylrest mit 1 bis 20 Kohlenstoffatomen, bevorzugt X = Alkylrest mit 1 bis 4 Kohlenstoffatomen,

R'' = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R'' = Alkylrest, insbesondere mit 1 bis 6 C-Atomen,

x = 0 bis 2, y = 0 bis 2 sowie n = 0 bis 2, m = 0 bis 2, m+n = 2, wobei x, y, n und m insbesondere Elemente aus der Menge der positiven ganzen Zahlen sind.

Durch die erfindungsgemäße Kombination der Struktureinheiten (I) mit den Struktureinheiten (II) und/oder (III)

in der Verbindung (H) gelingt es überraschenderweise, Beschichtungsmittel zur Verfügung zu stellen, die auch ohne Zusatz üblicher Rheologiehilfsmittel strukturviskos sind, während Beschichtungsmittel, die lediglich die Struktureinheiten (II) und/oder (III), nicht aber (I) aufweisen, keine Strukturviskosität aufweisen. Durch die Verwendung der Verbindungen (H) gelingt es daher erfindungsgemäß, die Rheologie einer Vielzahl von Beschichtungsmitteln einzustellen.

Bevorzugt werden in den erfindungsgemäßen Beschichtungsmitteln Verbindungen (H) eingesetzt, die mindestens eine Struktureinheit der Formel (I) und mindestens eine Struktureinheit der Formel (II) und mindestens eine Struktureinheit der Formel (III) aufweisen.

Ebenfalls bevorzugt werden Verbindungen (H) eingesetzt, bei denen mehr als 95 Mol-%, insbesondere mindestens 98 Mol-% und besonders bevorzugt 100 Mol-% der ursprünglich in der isocyanatgruppenhaltigen Verbindung ($H_G$) vorhandenen Isocyanatgruppen zu den Struktureinheiten (I) und (II) oder (I) und (III) oder (I) und (II) und (III) umgesetzt worden sind.

Insbesondere die gezielte Einstellung der Gehalte an den Struktureinheiten (I), (II) und/oder (III) der Verbindung (H) ermöglicht es, die für den jeweiligen Einsatzzweck der Beschichtungsmittel geforderten Eigenschaften bzgl. Kratzfestigkeit, Witterungsbeständigkeit und vor allem Rheologie problemlos und einfach einzustellen.

Bevorzugt sind dabei insbesondere Beschichtungsmittel, bei denen die Verbindung (H) zwischen 10 und 60 Mol-%, insbesondere zwischen 20 und 50 Mol-%, besonders bevorzugt 30 bis 50 Mol-%, jeweils bezogen auf die Gesamtheit der Struktureinheiten (I), (II) und (III), mindestens einer Struktureinheit der Formel (I) aufweist und
die Summe aus den Struktureinheiten (II) plus den Struktureinheiten (III) zwischen 90 und 40 Mol-%, insbesondere zwischen 80 und 50 Mol-%, besonders bevorzugt zwischen 70 und 50 Mol-%, jeweils bezogen auf die Gesamtheit der Struktureinheiten (I), (II) und (III), ist.

Die in den erfindungsgemäßen Beschichtungsmitteln eingesetzten Verbindungen (H) sind insbesondere erhältlich durch Umsetzung einer isocyanatgruppenhaltigen Verbindung ($H_G$)
mit einem primären Monoalkoxysilylamin (Ia) der Formel (Ia)

H
\
$N-(X-SiR''_x(OR')_{3-x})$ (Ia)
/
H

und
mit einem sekundären Monoalkoxysilylamin (IIa) der Formel (IIa)

H
\
$N-(X-SiR''_x(OR')_{3-x})$ (IIa)
/
R

und/oder
mit einem Bisalkoxysilylamin (IIIa) der Formel (IIIa)

H
\
$-N(X-SiR''_x(OR')_{3-x})_n(X'-SiR''_y(OR')_{3-y})_m$ (IIIa)

wobei R, R', X, X', R" x, y, m und n die oben angegebene Bedeutung haben.

Beispiele für geeignete Verbindungen (Ia) sind primäre Aminoalkylalkoxysilane wie beispielsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan und/oder 4-Aminobutyltriethoxysilan. Besonders bevorzugt sind 3-Aminopropyltrimethoxysilan und

3-Aminopropyltriethoxysilan.

Beispiele für geeignete Verbindungen (IIa) sind sekundäre Aminoalkylalkoxysilane wie beispielsweise N-(2-(trimethoxysilyl)ethyl)alkylamine, N-(3-(trimethoxysilyl)propyl)alkylamine, N-(4-(trimethoxysilyl)butyl)alkylamine, N-(2-(triethoxysilyl)ethyl)alkylamine, N-(3-(triethoxysilyl)propyl)alkylamine und/oder N-(4-(triethoxysilyl)butyl)alkylamine. Besonders bevorzugt sind N-(3-(triethoxysilyl)propyl)butylamin und N-(3-(trimethoxysilyl)propyl)butylamin.

Beispiele für geeignete Verbindungen (IIIa) sind Bisalkoxysilylamine wie beispielsweise Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin.

Geeignete Aminosilane (Ia), (IIa) und (IIIa) sind beispielsweise unter den Markennamen DYNASYLAN ® der Fa. DEGUSSA, Rheinfelden, Geniosil® der Firma Wacker, Burghausen und Silquest ® der Fa. OSI verfügbar.

Die isocyanatgruppenhaltigen Verbindungen ($H_G$) sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4' -diisocyanat, Diphenylmethan-2,4' -diisocyanat, p-Phenylendiisocyanat, Biphenyldiisocyanate, 3,3' -Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4' -diisocyanat, 4,4' - Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate.

Bevorzugt werden zur Herstellung der harnstoffgruppenhaltigen Verbindung (H) als isocyanatgruppenhaltige Verbindung ($H_G$) Trimere, insbesondere die Isocyanurat-Trimere eines aliphatischen und/oder cycloaliphatischen Diisocyanates, besonders bevorzugt die Isocyanurat-Trimere eines aliphatischen Diisocyanates eingesetzt. Ganz besonders bevorzugt werden zur Herstellung der harnstoffgruppenhaltigen Verbindung (H) als isocyanatgruppenhaltige Verbindung (HG) die Isocyanurat-Trimere eines linearen aliphatischen Diisocyanates eingesetzt, da so harnstoffhaltige Verbindungen (H) mit einer hohen rheologischen Aktivität erhalten werden können.

Besonders bevorzugte isocyanatgruppenhaltige Verbindungen ($H_G$) sind Hexamethylen-1,6-diisocyanat und 4,4' -Methylendicyclohexyldiisocyanat und deren Isocyanurat-Trimere. Die ganz besonders bevorzugte isocyanat-gruppenhaltige Verbindung ($H_G$) ist Hexamethylen-1,6-diisocyanat und deren Isocyanurat-Trimere.

Die Umsetzung der isocyanatgruppenhaltigen Verbindungen ($H_G$) mit den Verbindungen (Ia), (IIa) und/oder (IIIa) erfolgt vorzugsweise in Inertgas-atmosphäre bei Temperaturen von maximal 70°C, bevorzugt von maximal 60 °C.

Ganz besonders bevorzugt erfolgt hierbei die Umsetzung der isocyanatgruppen-haltigen Verbindung ($H_G$) mit einer Mischung aus ($\alpha$) dem primären Monoalkoxysilylamin (Ia) der Formel (Ia) und ($\beta$) dem sekundären Monoalkoxysilylamin (IIa) der Formel (IIa) und/oder dem Bisalkoxysilylamin (IIIa) der Formel (IIIa), da sich dies insbesondere im Hinblick auf die Vermeidung der Gelierung der Verbindung (H) bei dessen Herstellung als sehr günstig erwiesen hat.

Bekanntermaßen besteht bei der Reaktion von primären Aminen mit Isocyanaten nämlich die Gefahr von Gelierung, so dass die Reaktion üblicherweise in Gegenwart von Bindemitteln bzw. reaktiven oder unreaktiven Trägermaterialien durchgeführt wird, wie dies beispielsweise in der WO06/131314 beschrieben ist. Verwendet man zur Herstellung der erfindungsgemäß eingesetzten Verbindungen (B) eine Mischung aus dem primären Monoalkoxysilylamin (Ia) und dem sekundären Monoalkoxysilylamin (IIa) und/oder dem Bisalkoxysilylamin (IIIa), so tritt überraschenderweise auch ohne übliche Schutzmaßnahmen keine Gelierung auf und es werden die gewünschten Strukturen erhalten, so dass dieses Vorgehen ganz besonders bevorzugt ist.

In vielen Fällen hat es sich als besonders günstig erwiesen, die Verbindung (H) getrennt von den anderen Bestandteilen des Beschichtungsmittels, also auch getrennt von der isocyanatgruppenhaltigen Verbindung (B) herzustellen, so dass dies bevorzugt ist. Wenn die Komponente (B) Struktureinheiten (IV) und/oder (V) aufweist, ist es auch möglich, aber nicht bevorzugt, die Komponente (H) zusammen mit der Komponente (B) herzustellen.

Die erfindungsgemäßen Beschichtungsmittel enthalten bevorzugt 1 bis 20 Gew.-%, besonders bevorzugt 5 bis 15 Gew.-%, jeweils bezogen auf die nicht flüchtigen Bestandteile der isocyanatgruppenhaltigen Verbindung (B) des Beschichtungsmittels, mindestens einer harnstoffhaltigen Verbindung (H). Bevorzugt sind in der harnstoffhaltigen Verbindung (H), bezogen auf die Gesamtheit der NCO Gruppen der Verbindung (HG), zwischen 10 und 60 Mol-%, insbesondere zwischen 20 und 50 Mol-% der Isocyanatgruppen der Verbindung (HG) zur Struktureinheit der Formel (I) umgesetzt worden.

**Die isocyanatgruppenhaltigen Verbindungen (B)**

Als Komponente (B) enthalten die erfindungsgemäßen Beschichtungsmittel eine oder mehrere Verbindungen mit freien, d.h. unblockierten, und/oder blockierten Isocyanatgruppen. Bevorzugt enthalten die erfindungsgemäßen Beschichtungsmittel Verbindungen (B) mit freien Isocyanatgruppen. Die Isocyanatgruppen der isocyanatgruppenhaltigen Verbindungen (B) können aber auch in blockierter Form eingesetzt werden. Dies ist bevorzugt dann der Fall, wenn die erfindungsgemäßen Beschichtungsmittel als einkomponentige Systeme eingesetzt werden.

Die als Verbindungen (B) dienenden Di- und/oder Polyisocyanate sind bevorzugt an sich bekannte substituierte oder unsubstituierte aromatische, aliphatische, cycloaliphatische und/oder heterocyclische Di- und Polyisocyanate. Beispiele für geeignete Verbindungen (B) sind: die bereits bei der Beschreibung der Verbindung ($H_G$) genannten Di- und Polyisocyanate.

Weiterhin bevorzugte Verbindungen (B) sind die Dimeren und Trimeren, insbesondere die Biuret-Dimere und die Isocyanurat-Trimere der vorgenannten Diisocyanate.

Besonders bevorzugte Verbindungen (B) sind Hexamethylen-1,6-diisocyanat, Isophorondiisocyanat und 4,4' -Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Bevorzugt weist zumindest ein Teil der isocyanatgruppenhaltigen Verbindung (B) mindestens eine Struktureinheit der Formel (IV)

$$\begin{array}{l} -N-[X-SiR''_x(OR')_{3-x}] \\ \;\;\,| \\ \;\;\,R \end{array} \qquad (IV),$$

und/oder mindestens eine Struktureinheit der Formel (V)

$$-N(X-SiR''_x(OR')_{3-x})_n(X'-SiR''_y(OR')_{3-y})_m \qquad (V)$$

auf, wobei R, R', X, X', R" x, y, m und n die oben bei den Formeln (I), (II) und (III) angegebene Bedeutung haben.

Der Gesamtanteil der zu den Struktureinheiten (IV) und/oder (V) umgesetzten Isocyanatgruppen liegt in der Polyisocyanatverbindung (B) zwischen 0 und 90 Mol-%, bevorzugt zwischen 10 und 60 Mol-% der Isocyanatgruppen im Polyisocyanatgrundkörper.

Ganz besonders bevorzugt weist zumindest ein Teil der isocyanatgruppenhaltigen Verbindung (B) mindestens eine Struktureinheit der Formel (IV) und mindestens eine Struktureinheit der Formel (V) auf. Es wird so eine breite Palette verschiedener Beschichtungsmittel mit unterschiedlichen, gezielt einzustellenden Eigenschaften zur Verfügung gestellt, die sich auszeichnen durch universelle Bindemittel und eine jeweils speziell abgestimmte Isocyanatkomponente, die bei Bedarf auch noch mit anderen Vernetzungsmitteln, wie beispielsweise Aminoplastharzen, kombiniert werden kann.

Bei den erfindungsgemäß ganz besonders bevorzugten, mit den Struktureinheiten (IV) und (V) funktionalisierten isocyanatgruppenhaltigen Verbindungen (B) sind in den isocyanatgruppenhaltigen Verbindungen (B)

- zwischen 0 und 90 Mol-%, bevorzugt 10 bis 60 Mol-%, besonders bevorzugt 20 bis 50 Mol-%, der Isocyanatgruppen im Polyisocyanatgrundkörper zu den Struktureinheiten (IV) und/oder
- zwischen 0 und 90 Mol-%, bevorzugt 10 bis 60 Mol-%, besonders bevorzugt 20 bis 50 Mol-%, der Isocyanatgruppen im Polyisocyanatgrundkörper zu den Struktureinheiten (V)

umgesetzt.

Die erfindungsgemäß bevorzugten, mit den Struktureinheiten (IV) und/oder (V) funktionalisierten Verbindungen (B) werden analog zu den Verbindungen (H) besonders bevorzugt dadurch hergestellt, dass ein Teil der Isocyanatgruppen der Verbindung (B) mit einem sekundären Aminoalkylalkoxysilan (IIa) der Formel (IIa)

H

\

$N\text{-}(X\text{-}SiR''_x(OR')_{3-x})$ (IIa)

/

R

und/oder
ein Teil der Isocyanatgruppen der Verbindung (B) mit einem sekundären Bisalkoxysilylamin der Formel (IIIa)

$$HN(X\text{-}SiR''_x(OR')_{3-x})_n(X'\text{-}SiR''_y(OR')_{3-y})_m \qquad \text{(IIIa)}$$

umgesetzt werden, wobei R, R', R", X, X' sowie x, y, n und m die oben angegebene Bedeutung haben.

Ganz besonders bevorzugte isocyanatgruppenhaltige Verbindungen (B) sind insbesondere Umsetzungsprodukte von Hexamethylen-1,6-diisocyanat und/oder Isophorondiisocyanat, und/oder deren Isocyanurat-Trimere mit N-(3-(trimethoxysilyl) propyl)butylamin und Bis(3-propyltrimethoxysilyl)amin.

Die restlichen freien Isocyanatgruppen der isocyanatgruppenhaltigen Verbindungen (B) können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

Bevorzugt enthält der erfindungsgemäß eingesetzte Polyisocyanathärter wenigstens einen Wasserfänger, beispielsweise reaktive Silane mit einer höheren Reaktivität gegenüber Wasser als Isocyanate. Vorteilhaft werden als Wasserfänger insbesondere Orthoameisensäuretrialkylester verwendet. Als Wasserfänger wird besonders bevorzugt Triethylorthoformiat verwendet. Vorzugsweise werden 0,01 Gew.-% bis 10 Gew.-%, bevorzugt 0,03 Gew.-% bis 5,0 Gew.-%, mindestens eines Wasserfängers bezogen auf den Gesamtgehalt des Beschichtungsmittels an nichtflüchtigen Anteilen, zugesetzt.

**Die hydroxylgruppenhaltige Verbindung (A)**

Als hydroxylgruppenhaltige Verbindung (A) werden vorzugsweise niedermolekulare Polyole als auch oligo- und/oder polymere Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerytritol sowie Dipentaerytritol, eingesetzt.

Bevorzugt werden solche niedermolekularen Polyole in untergeordneten Anteilen der oligo- und/oder polymeren Polyolkomponente (A) beigemischt.

Die bevorzugten oligo- und/oder polymeren Polyole (A) weisen massenmittlere Molekulargewichte Mw > 500 Dalton, gemessen mittels GPC (Gelpermeationschromatographie), bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole und insbesondere Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 mg KOH/g, auf.

Die Glasübergangstemperaturen, gemessen per DSC (Differential-Thermoanalyse) nach DIN-EN-ISO 11357-2, der Polyole liegen bevorzugt zwischen - 150 und 100 °C, besonders bevorzugt zwischen -120°C und 80°C. Geeignete Polyesterpolyole sind beispielsweise in EP-A-0 994 117 und EP-A-1 273 640 beschrieben. Außerdem können hydroxyfunktionelle Polyester eingesetzt werden, bei denen im Mittel mindestens eine Hydroxylfunktion des hydroxyfunktionellen Polyesters mit mindestens einer Säure ausgewählt aus der Gruppe der isomeren C8-C9-Monocarbonsäuren verestert ist. Insbesondere kann so ein zufrieden stellender Restglanz der resultierenden Beschichtungen erreicht werden. Die vorgenannt beschriebene Veresterung mit mindestens einer C8-C9-Carbonsäure wird auch synonym als "Säuremodifikation" bezeichnet.

Vorzugsweise ist der Rest der isomeren C8-C9-Monocarbonsäure gesättigt. Derartige Klarlackzusammensetzungen weisen eine gute Witterungsstabilität auf.

Besonders vorteilhafte Eigenschaften im Sinne der Erfindung resultieren, wenn der Rest der C8-C9-Monocarbonsäure der Rest von Octansäure oder Isononansäure ist. Besonders bevorzugt wird als C8-C9-Monocarbonsäure Isononansäure eingesetzt.

Bevorzugt werden für die Veresterung mit den isomeren C8-C9-Monocarbonsäuren hyperverzweigte, dendritische hydroxyfunktionelle Polyester eingesetzt. Beispiele für diese modifizierten hyperverzweigten, dendritischen Polyester sind in der WO-A-08/148555, Seiten 4 bis 8 beschrieben.

Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Polyacrylatpolyole sind in der Regel Copolymerisate und weisen vorzugsweise massenmittlere

Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur Tg der Polyacrylatpolyole liegt in der Regel zwischen -100 und 100 °C. Bevorzugt weist das als Komponente (A) eingesetzte Polyacrylatpolyol eine Glasübergangstemperatur Tg von weniger als 10°C, bevorzugt von -60°C bis 5°C, besonders bevorzugt von -30°C bis < 0°C, auf. Die Glasübergangstemperatur wird mit Hilfe von DSC-Messungen nach DIN-EN-ISO 11357-2 bestimmt.

Die Polyacrylatpolyole weisen bevorzugt eine OH-Zahl von 60 bis 300 mg KOH/g, insbesondere zwischen 100 und 250 mgKOH/g, ganz besonders zwischen 150 und 200 mgKOH/g, auf.

Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Polyacrylatpolyole (A) weisen bevorzugt eine Säurezahl zwischen 0 und 30 mg KOH/g auf. Die Säurezahl gibt hierbei die Anzahl der mg Kaliumhydroxid an, die zur Neutralisation von 1 g der jeweiligen Verbindung der Komponente (b) verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2-Hydroxypropylmethacrylat, 3-Hydroxypropylacrylat, 3-Hydroxypropylmethacrylat , 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Polyacrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinyl-aromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

In einer weiteren Ausführungsform der Erfindung kann die hydroxylgruppenhaltige Verbindung (A) neben den Hydroxylgruppen Struktureinheiten der Formeln (IV) und/oder (V) aufweisen.

Struktureinheiten der Formel (V) können in die Verbindung (A) beispielsweise durch Einbau von Monomereinheiten mit solchen Struktureinheiten oder durch Umsetzung von Polyolen, die weitere funktionelle Gruppen aufweisen, mit einem Bissilan der obigen Formel (IIIa) eingeführt werden, wobei die Substituenten die obengenannte Bedeutung haben.

Struktureinheiten der Formeln (IV) können in die Verbindung (A) beispielsweise durch Einbau von Monomereinheiten mit solchen Struktureinheiten oder durch Umsetzung von Polyolen, die weitere funktionelle Gruppen aufweisen, mit einem Monosilan der obigen Formel (IIa)eingeführt werden.

Bevorzugt enthält die Komponente (A) aber keine Struktureinheiten der Formel (IV) und keine Struktureinheiten der Formel (V).

**Die Kombination der Komponenten A und B sowie weitere Komponenten des Beschichtungsmittels**

Der Gewichtsanteil der einzusetzenden hydroxylgruppenhaltigen Verbindungen A, bezogen auf den Gewichtsanteil der isocyanatgruppenhaltigen Verbindungen B, hängt vom Hydroxyäquivalentgewicht des Polyols und vom Äquivalentgewicht der freien Isocyanatgruppen des Polyisocyanat B ab.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der hydroxylgruppenhaltigen Verbindungen (A) und bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Um weiter verbesserte Beständigkeiten der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit direkt im Anschluss an die thermische Härtung, einen hohen Glanz und einen hohen Glanzerhalt nach Bewitterung zu gewährleisten, ist es außerdem bevorzugt, den Gehalt an Struktureinheiten (II), (III), (IV) und/oder (V) maximal so hoch zu wählen, dass die erfindungsgemäßen Beschichtungsmittel weniger als 6,5 Massen-% Si der Struktureinheiten (II), (III), (IV) und/oder (V), ganz besonders maximal 6,0 Massen-% Si der Struktureinheiten (II), (III), (IV) und/oder (V), jeweils bezogen auf den Feststoffgehalt der Beschichtungsmittel, enthalten. Der Silangehalt in Masse-% Si wird dabei rechnerisch aus den eingesetzten Mengen an den Verbindungen mit den Struktureinheiten (II), (III), (IV) und (V) bzw. den Verbindungen (IIa) bzw. (IIIa) ermittelt.

In einer weiteren Ausführungsform der Erfindung können die Strukturelemente (IV) und/oder (V) auch Bestandteil einer oder mehrerer sich von den Komponenten (A) und (B) unterscheidender weiterer Komponenten (C) sein, wobei die vorgenannten Kriterien anzuwenden sind.

In der Regel werden solche Komponenten (C) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Die Gewichtsanteile des Polyols A und des Polyisocyanates B werden vorzugsweise solchermaßen gewählt, dass das molare Äquivalentverhältnis der nicht umgesetzten Isocyanatgruppen der isocyanathaltigen Verbindungen (B) zu den Hydroxylgruppen der hydroxylgruppenhaltigen Verbindungen (A) zwischen 0,9:1 und 1:1,1, bevorzugt zwischen 0,95:1 und 1,05:1, besonders bevorzugt zwischen 0,98:1 und 1,02:1, liegt.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel eine Lackkomponente, enthaltend die hydroxylgruppenhaltige Verbindung (A) sowie weitere nachfolgend beschriebene Komponenten, mit einer weiteren Lackkomponente, enthaltend die isocyanatgruppenhaltige Verbindung (B), die harnstoffgruppenhaltige Verbindung (H) und gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Als Katalysatoren (D) für die Vernetzung der Alkoxysilyl-Einheiten sowie für die Reaktion zwischen den Hydroxylgruppen der Verbindung (A) und den freien Isocyanatgruppen der Verbindung (B) können an sich bekannte Verbindungen eingesetzt werden. Beispiele sind Lewis-Säuren (Elektronenmangelverbindungen), wie beispielsweise Zinnnaphtenat, Zinnbenzoat, Zinnoctoat, Zinnbutyrat, Dibutylzinndilaurat, Dibutylzinndiacetat, Dibutylzinnoxid, Bleioctoat, sowie Katalysatoren wie in WO-A-06/042585 beschrieben.

Als Katalysator (D) werden besonders bevorzugt phosphorhaltige, insbesondere phosphor- und stickstoffhaltige Katalysatoren eingesetzt. Dabei können auch Mischungen aus zwei oder mehreren verschiedenen Katalysatoren eingesetzt werden.

Beispiele für geeignete phosphorhaltige Katalysatoren sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Ganz besonders bevorzugt werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und - di-ester, eingesetzt. Insbesondere werden die entsprechenden aminblockierten Phosphorsäureester, und hier bevorzugt aminblockierte Phosphorsäureethylhexylester und aminblockierte Phosphorsäurephenylester, ganz besonders bevorzugt amin-blockierter Phosphorsäure-bis(2-ethylhexyl)ester eingesetzt.

Das Amin der als Katalysator (D) eingesetzten Aminaddukte der Phosphorsäure-mono- und - di-ester ist dabei bevorzugt ausgewählt aus der Gruppe der Amine mit einem pKb-Wert > 3 und einem Siedepunkt >100°C, wie dies in der Deutschen Patentanmeldung DE 102007061854 beschrieben ist. Besonders bevorzugt werden als Amin für diese Aminaddukte der Phosphorsäure-mono- und - di-ester cyclische tertiäre Amine, wie N-Dimethyl-benzylamin und N-Methyl-morpholin, insbesondere bicyclische tertiäre Amine, insbesondere Diazabicyclooctan (DABCO), eingesetzt.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries

als besonders geeigneter Katalysator auf der Basis eines aminblockierten Phosphorsäureteilesters genannt.

Die Katalysatoren (D) werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

Als Lösemittel für die erfindungsgemäßen Beschichtungsmittel sind insbesondere solche geeignet, die im Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf.

Neben den Verbindungen (A), (B), (C) und (D) können noch weitere Bindemittel (E) eingesetzt werden, welche vorzugsweise mit den Hydroxylgruppen der Verbindung (A) und/oder mit den freien Isocyanatgruppen der Verbindung (B) und/oder mit den Alkoxysilylgruppen der Verbindungen (A), (B) und/oder (C) reagieren und Netzwerkpunkte ausbilden können.

Beispielsweise sind als Komponente (E) Aminoplastharze und/oder Epoxyharze, verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive sind:

- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktivverdünner, wie sie aus dem Stand der Technik allgemein bekannt sind, welche bevorzugt inert gegenüber den - Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- und /oder Flammschutzmittel.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung und den für die Lackierung von Anbauteilen angewandten Temperaturen, die bevorzugt zwischen 30 und 90°C liegen, auch längere Härtzeiten zur Anwendung kommen können.

Die erfindungsgemäßen Beschichtungsmittel zeichnen sich auch ohne den Zusatz von bekannten Rheologiehilfsmitteln durch eine verbesserte Ablaufneigung aus, d.h. sie sind auch in höheren Schichtdicken > 40μm, insbesondere > 50 μm, applizierbar, ohne dass Läufer mit einer Länge von >= 1 cm auftreten. Die Beschichtungsmittel führen auch bei Härtung bei niedrigen Temperaturen von maximal 90°C, wie sie im Bereich der Beschichtung von Kunststoffteilen, beispielsweise für Automobil-Anbauteile, oder im Bereich der Autoreparaturlackierung üblich sind, zu Beschichtungen mit einer sehr guten optischen Qualität. Gleichzeitig zeigen die erfindungsgemäßen Beschichtungsmittel einen guten Verlauf, was insbesondere im Bereich der Automobilerst- und der Automobilreparatur-lackierung sowie der Beschichtung von Automobilanbauteilen von hoher Bedeutung ist.

Die erfindungsgemäßen Beschichtungsmittel liefern außerdem neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 μm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des

Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung und für die Lackierung von Anbauteilen angewandten Temperaturen, die bevorzugt zwischen 30 und 90°C liegen, auch längere Härtzeiten zur Anwendung kommen können.

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

## Beispiele

### Herstellung des Poly(meth)acrylatpolyols A1

In einem, mittels Ölumlaufthermostat beheizbaren, doppelwandigen 4-l Edelstahlkessel, ausgestattet mit Thermometer, Ankerrührer, 2 Tropftrichtern und Rückflußkühler wird Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel (Shellsol A) auf einen Feststoffgehalt von 65 Gew.-% eingestellt.

Tabelle 1: Monomerzusammensetzung in Gewichtsteilen des Bindemittels (A1)

| | Polyol (A1) |
|---|---|
| Komponente | Gew.-Tl |
| Styrol | 8,0 |
| n-Butylmethacrylat | 8,0 |
| Acrylsäure | 0,6 |
| 4-Hyd roxybutylacrylat | 12,0 |
| 2-Hydroxyethylacrylat | 12,0 |
| n-Butylacrylat | 19,0 |

Das Polyacrylatpolyol (A1) weist eine anhand der Foxgleichung berechnete Glasübergangstemperatur von -26°C, eine ausgehend von der Menge an hydroxylgruppenhaltigen Monomeren berechnete OH-Zahl von 175 mgKOH/g und eine ausgehend von der Menge an Acrylsäure berechnete Säure-Zahl von 8-12 mgKOH/g auf.

Durch Mischen des Bindemittels (A1) mit den in Tabelle 2 angegebenen Additiven und Lösemitteln wird eine Stammlack-Komponente hergestellt:

Tabelle 2: Zusammensetzung der Stammlack-Komponente in Gewichtsteilen

| Komponente | Gewichtsteile |
|---|---|
| Bindemittel (A1) | 65 |
| Solvesso 200 1) | 5 |
| Butylacetat | 27 |
| Tinuvin 282 2) | 1,4 |
| Tinuvin 382 3) | 1,4 |

(fortgesetzt)

| Komponente | Gewichtsteile |
|---|---|
| Dynoadd F1 4) | 0,2 |
| Erläuterungen zu Tabelle 2:<br>1) Solvesso200 = handelsübliche Benzinfraktion erhältlich von Exxon Mobile Petroleum & Chemical<br>2) Tinuvin 282 = handelsübliches Lichtschutzmittel, erhältlich von CIBA/BASF<br>3) Tinuvin 382 = handelsübliches Lichtschutzmittel, erhältlich von CIBA/BASF<br>4) Dynoadd F1 = handelsübliches, mehrfunktionelles, oberflächenaktives Additiv der Firma HertfelderGmbH, Bielefeld | |

**Herstellung eines Härters (B1) mit einem Umsetzungsgrad der Isocyanatgruppen von c= 30 Mol% und einem Anteil von 10 Mol% Monosilan-Struktureinheiten (IV) und 90 Mol% Bissilan-Struktureinheiten (V)**

In einem Dreihalsglaskolben, ausgestattet mit einem Rückflußkühler und einem Thermometer, werden 46,21 Teile trimerisiertes Hexamethylendiisocyanat (HDI) (Desmodur® N3300, Firma Bayer Material Science), 28,2 Teile Butylacetat und 2,07 Teile Triethylorthoformiat vorgelegt. Unter Stickstoffüberschleierung und Rühren wird eine Mischung aus 21,85 Teile Bis-[3-(trimethoxysilyl)propyl]amin (Dynasylan® 1124, Firma Degussa, Rheinfelden) und 1,67 Teile N-[-3-(trimethoxysilyl)-propyl]-butylamin (Dynasylan® 1189, Firma Degussa, Rheinfelden) so zudosiert, dass 50°C nicht überschritten werden. Nach Ende der Dosierung wird die Reaktionstemperatur bei 50°C gehalten. Der Blockierungsgrad wird mittels Titration überprüft. Der Härter weist einen berechneten nichtflüchtigen Anteil von 70 Gew.-% und einen NCO-Gehalt (fest) von 10 Gew.-% auf.

**Herstellung einer harnstoffgruppenhaltigen Verbindung (H1) mit einem Anteil von 45 Mol-% primären Struktureinheiten (I), einem Anteil von 5 Mol-% sekundären Struktureinheiten (II) und einem Anteil von 50 Mol-% Bisalkoxysilylamin-Struktureinheiten (III), wobei die Mol-%-Angaben jeweils bezogen sind auf die Gesamtheit der Struktureinheiten (I) plus (II) plus (III), und mit einem Umsetzungsgrad der Isocyanatgruppen von ($H_G$) von c=100 Mol%**

In einem Dreihalsglaskolben, ausgestattet mit einem Rückflußkühler und einem Thermometer, werden 31,2 Teile trimerisiertes Hexamethylendiisocyanat (HDI) (Desmodur® N3600, Firma Bayer Material Science) und 20,0 Teile Solventnaphta vorgelegt. Unter Stickstoffüberschleierung und Rühren wird bei 20-30°C eine Mischung aus 29,6 Teile Bis-[3-(trimethoxysilyl)propyl]amin (Dynasylan® 1124, Firma Degussa, Rheinfeiden), 2,0 Teile N-[-3-(trimethoxysilyl)-propyl]-butylamin (Dynasylan® 1189, Firma Degussa, Rheinfelden) und 17,0 Teile 3-Aminopropyltriethoxysilan (Dynasylan® AMEO, Firma Degussa, Rheinfelden) so zudosiert, das 40°C nicht überschritten werden. Nach Ende der Dosierung wird die Reaktionstemperatur bei 20-30°C gehalten. Die vollständige Umsetzung der Isocyanatgruppen wird mittels Titration festgestellt. Man erhält eine hochviskose transparente Masse, welche durch Lufteinschlüsse leicht getrübt ist. Die Verbindung (H1) weist einen berechneten nichtflüchtigen Anteil von 80 Gew.-% und eine NCO-Gehalt (fest) von 0 Gew.-% auf.

**Herstellung einer harnstoffgruppenhaltigen Verbindung (HV1) mit Isocyanatgruppen und mit einem Anteil von 56 Mol-% primären Struktureinheiten (I), einem Anteil von 6 Mol-% sekundären Struktureinheiten (II) und einem Anteil von 38 Mol-% Bisalkoxysilyiamin-Struktureinheiten (III), wobei die Mol-%-Angaben jeweils bezogen sind auf die Gesamtheit der Struktureinheiten (I) plus (II) plus (III), und mit einem Umsetzungsgrad der Isocyanatgruppen von (HG) von c= 80 Mol%**

In einem Dreihalsglaskolben, ausgestattet mit einem Rückflußkühler und einem Thermometer, werden 36,60 Teile trimerisiertes Hexamethylendiisocyanat (HDI) (Desmodur® N3600, Firma Bayer Material Science) und 19,95 Teile Solventnaphta vorgelegt. Unter Stickstoffüberschleierung und Rühren wird bei 20-30°C eine Mischung aus 20,83 Teile Bis-[3-(trimethoxysilyl)propyl]amin (Dynasylan® 1124, Firma Degussa, Rheinfeiden), 2,39 Teile N-[-3-(trimethoxysilyl)-propyl]-butylamin (Dynasylan® 1189, Firma Degussa, Rheinfelden) und 20,22 Teile 3-Aminopropyltriethoxysilan (Dynasylan® AMEO, Firma Degussa, Rheinfelden) so zudosiert, das 40°C nicht überschritten werden. Nach Ende der Dosierung wird die Reaktionstemperatur bei 20-30°C gehalten. Die Umsetzung der Isocyanatgruppen wird mittels Titration festgestellt. Man erhält eine hochviskose transparente Masse, welche durch Lufteinschlüsse leicht getrübt ist. Die Verbindung (HV1) weist einen berechneten nichtflüchtigen Anteil von 80 Gew.-% und einen NCO-Gehalt (fest) von 2,0 Gew.-% auf.

**Herstellung einer harnstoffgruppenhaltigen Verbindung (H2) einem Anteil von 45 Mol-% primären Struktureinheiten (I) und einem Anteil von 55 Mol-% Bisalkoxysilylamin-Struktureinheiten (III), wobei die Mol-%-Angaben jeweils bezogen sind auf die Gesamtheit der Struktureinheiten (I) plus (III), und mit einem Umsetzungsgrad der Isocyanatgruppen von (HG) von c=100 Mol%**

In einem Dreihalsglaskolben, ausgestattet mit einem Rückflußkühler und einem Thermometer, werden 30,83 Teile trimerisiertes Hexamethylendiisocyanat (HDI) (Desmodur® N3600, Firma Bayer Material Science) und 19,96 Teile Solventnaphta vorgelegt. Unter Stickstoffüberschleierung und Rühren wird bei 20-30°C eine Mischung aus 32,17 Teile Bis-[3-(trimethoxysilyl)propyl]amin (Dynasylan® 1124, Firma Degussa, Rheinfelden) und 17,03 Teile 3-Aminopropyltriethoxysilan (Dynasylan® AMEO, Firma Degussa, Rheinfelden) so zudosiert, das 40°C nicht überschritten werden. Nach Ende der Dosierung wird die Reaktionstemperatur bei 20-30°C gehalten. Die vollständige Umsetzung der Isocyanatgruppen wird mittels Titration festgestellt. Man erhält eine hochviskose transparente Masse, welche durch Lufteinschlüsse leicht getrübt ist. Die Verbindung (H2) weist einen berechneten nichtflüchtigen Anteil von 80 Gew.-% und einen NCO-Gehalt (fest) von 0 Gew.-% auf.

**Herstellung einer harnstoffgruppenhaltigen Verbindung (HV2) mit Isocyanatgruppen und mit einem Anteil von 56 Mol-% primären Struktureinheiten (I) und einem Anteil von 44 Mol-% Bisalkoxysilylamin-Struktureinheiten (III), wobei die Mol-%-Angaben jeweils bezogen sind auf die Gesamtheit der Struktureinheiten (I) plus (III), und mit einem Umsetzungsgrad der Isocyanatgruppen von (HG) von c= 80 Mol%**

In einem Dreihalsglaskolben, ausgestattet mit einem Rückflußkühler und einem Thermometer, werden 36,10 Teile trimerisiertes Hexamethylendiisocyanat (HDI) (Desmodur® N3600, Firma Bayer Material Science) und 19,99 Teile Solventnaphta vorgelegt. Unter Stickstoffüberschleierung und Rühren wird bei 20-30°C eine Mischung aus 23,97 Teile Bis-[3-(trimethoxysilyl)propyl]amin (Dynasylan® 1124, Firma Degussa, Rheinfelden) und 19,94 Teilen 3-Aminopropyltriethoxysilan (Dynasylan® AMEO, Firma Degussa, Rheinfelden) so zudosiert, das 40°C nicht überschritten werden. Nach Ende der Dosierung wird die Reaktionstemperatur bei 20-30°C gehalten. Die Umsetzung der Isocyanatgruppen wird mittels Titration festgestellt. Man erhält eine hochviskose transparente Masse, welche durch Lufteinschlüsse leicht getrübt ist. Die Verbindung (HV2) weist einen berechneten nichtflüchtigen Anteil von 80 Gew.-% und einen NCO-Gehalt (fest) von 2,0 Gew.-% auf.

**Herstellung einer harnstoffgruppenhaltigen Verbindung (H3) mit einem Anteil von 35 Mol-% primären Struktureinheiten (I), einem Anteil von 15 Mol-% sekundären Struktureinheiten (II) und einem Anteil von 50 Mol-% Bisalkoxysilylamin-Struktureinheiten (III), wobei die Mol-%-Angaben jeweils bezogen sind auf die Gesamtheit der Struktureinheiten (I) plus (II) plus (III), und mit einem Umsetzungsgrad der Isocyanatgruppen von ($H_G$) von c=100 Mol%**

In einem Dreihalsglaskolben, ausgestattet mit einem Rückflußkühler und einem Thermometer, werden 31,1 Teile trimerisiertes Hexamethylendiisocyanat (HDI) (Desmodur® N3600, Firma Bayer Material Science) und 20 Teile Solventnaphta vorgelegt. Unter Stickstoffüberschleierung und Rühren wird bei 20-30°C eine Mischung aus 29,5 Teilen Bis-[3-(trimethoxysilyl)propyl]amin (Dynasylan® 1124, Firma Degussa, Rheinfeiden), 6,1 Teilen N-[-3-(trimethoxysilyl)-propyl]-butylamin (Dynasylan® 1189, Firma Degussa, Rheinfelden) und 13,4 Teilen 3-Aminopropyltriethoxysilan (Dynasylan® AMEO, Firma Degussa, Rheinfelden) so zudosiert, das 40°C nicht überschritten werden. Nach Ende der Dosierung wird die Reaktionstemperatur bei 20-30°C gehalten. Die vollständige Umsetzung der Isocyanatgruppen wird mittels Titration festgestellt. Man erhält eine hochviskose transparente Masse, welche durch Lufteinschlüsse leicht getrübt ist. Die Verbindung (H3) weist einen berechneten nichtflüchtigen Anteil von 80 Gew.-% und einen NCO-Gehalt (fest) von 0 Gew.-% auf.

**Herstellung einer harnstoffgruppenhaltigen Verbindung (HV3) gemäß WO06/131314 mit einem Anteil von 100 Mol-% primären Struktureinheiten (I), wobei die Mol-%-Angaben jeweils bezogen sind auf die Gesamtheit der Struktureinheiten (I) plus (II) plus (III)**

In einem Dreihalsglaskolben, ausgestattet mit einem Rückflußkühler und einem Thermometer, werden 13,10 Teile monomeres cycloaliphatisches Diisocyanat $H_{12}$MDI (Desmodur W) vorgelegt. Unter Stickstoffüberschleierung und rühren werden 22,10 Teile 3-Aminopropyltriethoxysilan (Dynasylan® AMEO, Firma Degussa, Rheinfelden) so zudosiert, das 50°C nicht überschritten werden. Nach Ende der Dosierung wird die Reaktionstemperatur bei 20-30°C gehalten. Es wird eine hochzähe Masse erhalten, die nicht titrierfähig ist. Auf eine weitere Verarbeitung wird daher verzichtet.

**Herstellung einer harnstoffgruppenhaltigen Verbindung (HV4) gemäß WO06/131314 mit einem Anteil von 100 Mol-% primären Struktureinheiten (I), wobei die Mol-%-Angaben jeweils bezogen sind auf die Gesamtheit der Struktureinheiten (I) plus (II) plus (III)**

In einem Dreihalsglaskolben, ausgestattet mit einem Rückflußkühler und einem Thermometer, werden 28,80 Teile trimerisiertes Hexamethylendiisocyanat (HDI) (Desmodur® N3600, Firma Bayer Material Science) vorgelegt. Unter Stickstoffüberschleierung und rühren werden 35,36 Teile 3-Aminopropyltriethoxysilan (Dynasylan AMEO, Firma Degussa, Rheinfelden) über so zudosiert, das 50°C nicht überschritten werden. Nach Ende der Dosierung wird die Reaktionstemperatur bei 20-30°C gehalten. Die vollständige Blockierung wird mittels Titration festgestellt.

Es wird eine hochzähe Masse erhalten, die nicht titrierfähig ist. Auf eine weitere Verarbeitung wird daher verzichtet.

**Herstellung einer harnstoffgruppenhaltigen Verbindung (H4) mit einem Anteil von 45 Mol-% primären Struktureinheiten (I), einem Anteil von 55 Mol-% sekundären Struktureinheiten (II) und einem Anteil von 0 Mol-% Bisalkoxysilylamin-Struktureinheiten (III), wobei die Mol-%-Angaben jeweils bezogen sind auf die Gesamtheit der Struktureinheiten (I) plus (II) plus (III), und mit einem Umsetzungsgrad der Isocyanatgruppen von ($H_G$) von c=100 Mol%**

In einem Dreihalsglaskolben, ausgestattet mit einem Rückflußkühler und einem Thermometer, werden 30,8 Teile trimerisiertes Hexamethylendiisocyanat (HDI) (Desmodur® N3600, Firma Bayer Material Science) und 16,0 Teile Solventnaphta vorgelegt. Unter Stickstoffüberschleierung und Rühren wird bei 20-30°C eine Mischung aus 20,7 Teilen N-[-3-(trimethoxysilyl)-propyl]-butylamin (Dynasylan® 1189, Firma Degussa, Rheinfelden) und 15,9 Teilen 3-Aminopropyltriethoxysilan (Dynasylan® AMEO, Firma Degussa, Rheinfelden) so zudosiert, das 40°C nicht überschritten werden. Nach Ende der Dosierung wird die Reaktionstemperatur bei 20-30°C gehalten. Die vollständige Umsetzung der Isocyanatgruppen wird mittels Titration festgestellt. Die Verbindung (H4) weist einen berechneten nichtflüchtigen Anteil von 80 Gew.-% und einen NCO-Gehalt (fest) von 0 Gew.-% auf.

**Herstellung einer harnstoffgruppenhaltigen Verbindung (H5) mit einem Anteil** von **15 Mol-% primären Struktureinheiten (I), einem Anteil von 35 Mol-% sekundären Struktureinheiten (II) und einem Anteil von 50 Mol-% Bisalkoxysilylamin-Struktureinheiten (III), wobei die Mol-%-Angaben jeweils bezogen sind auf die Gesamtheit der Struktureinheiten (I) plus (II) plus (III), und mit einem Umsetzungsgrad der Isocyanatgruppen von ($H_G$) von c=100 Mol%**

In einem Dreihalsglaskolben, ausgestattet mit einem Rückflußkühler und einem Thermometer, werden 31,0 Teile trimerisiertes Hexamethylendiisocyanat (HDI) (Desmodur® N3600, Firma Bayer Material Science) und 20 Teile Solventnaphta vorgelegt. Unter Stickstoffüberschleierung und Rühren wird bei 20-30°C eine Mischung aus 28,0 Teilen Bis-[3-(trimethoxysilyl)propyl]amin (Dynasylan® 1124, Firma Degussa, Rheinfeiden), 13,5 Teilen N-[-3-(trimethoxysilyl)-propyl]-butylamin (Dynasylan® 1189, Firma Degussa, Rheinfelden) und 5,3 Teilen 3-Aminopropyltriethoxysilan (Dynasylan® AMEO, Firma Degussa, Rheinfelden) so zudosiert, das 40°C nicht überschritten werden. Nach Ende der Dosierung wird die Reaktionstemperatur bei 20-30°C gehalten. Die vollständige Umsetzung der Isocyanatgruppen wird mittels Titration festgestellt. Die Verbindung (H5) weist einen berechneten nichtflüchtigen Anteil von 80 Gew.-% und einen NCO-Gehalt (fest) von 0 Gew.-% auf.

**Herstellung verschiedener Mischungen (M1) bis (M5) und (MV0) bis (MV3) aus dem Härter (B1) und den harnstoffgruppenhaltigen Verbindungen (H1) bis (H5) und (HV1) bis (HV2)**

In einem Weithalsglasgefäss (200 ml) werden 90 Teile des Härters (B1) mit 10 Teilen der in Tabelle 3 angegebenen jeweiligen harnstoffhaltigen Verbindung (H) unter kräftigem Rühren mittels KPG-Rührer und Flügelblatt für 3 Stunden gemischt.

Tabelle 3: Zusammensetzung in Gew.-Teilen und Eigenschaften der Mischungen aus Härter (B1) mit den harnstoffgruppenhaltigen Verbindungen (H1) bis (H5) sowie (HV1) bis (HV3)

| Mischung | MV0 | M1 | MV1 | M2 | MV2 | M3 | MV3 | M4 | M5 |
|---|---|---|---|---|---|---|---|---|---|
| B1 | 100,0 Tle | 90,0 Tle | 90,0 Tle | 90,0 Tle | 90,0 Tle | 90,0 Tle | | 90,0 Tle | 90,0 Tle |
| H1 | | 10,0 Tle | | | | | | | |
| HV1 | | | 10,0 Tle | | | | | | |
| H2 | | | | 10,0 Tle | | | | | |
| HV2 | | | | | 10,0 Tle | | | | |
| H3 | | | | | | 10,0 Tle | | | |
| HV3 | | | | | | | 100,0 Tle | | |
| H4 | | | | | | | | 10,0 Tle | |
| H5 | | | | | | | | | 10,0 Tle |
| Visuelle Beurteitung | Homo-gen | Homogen | Gelteilchen | Homogen | Gelteilchen | Homogen | | Homogen | Homogen |
| | Fliessfähig | fliessfähig und strukturviskos | fliessfähig und strukturviskos | fliessfähig und strukturviskos | fliessfähig und strukturviskos | fliessfähig und strukturviskos | Hochviskos, nicht mit B1 mischbar | fliessfähig und strukturviskos | Fliessfähig, leicht strukturviskos |

**Herstellung der Beschichtungsmittel der Beispiele 1 bis 5 und der Vergleichsbeispiele V1 bis V3**

Aus den in Tabelle 4 angegebenen Komponenten werden die Klarlacke der erfindungsgemäßen Beispiele 1 bis 5 und die Klarlacke der Vergleichsbeispiele V1 bis V3 dadurch hergestellt, dass die in Tabelle 4 angegebenen Komponenten vereinigt und solange verrührt werden, bis eine homogene Mischung entsteht. Die Zusammensetzung der Stammlack-Komponente ist dabei in Tabelle 2 angegeben.

Tabelle 4: Zusammensetzung der Beschichtungsmittel der erfindungsgemäßen Beispiele 1 bis 5 und der Vergleichsbeispiele V1 bis V3 in Gewichtsteilen

| | Vgl.bsp. 1 | Beispiel 1 | Vgl.bsp. 2 | Beispiel 2 | Vgl.bsp. 3 | Beispiel 3 | Beispiel 4 | Beispiel 5 |
|---|---|---|---|---|---|---|---|---|
| Stammlack | 100 | 100 | 100 | 100 | 100 | 100 | 100 | 100 |
| MV0 | 75 | | | | | | | |
| M1 | | 75 | | | | | | |
| MV1 | | | 75 | | | | | |
| M2 | | | | 75 | | | | |
| MV2 | | | | | 75 | | | |
| M3 | | | | | | 75 | | |
| M4 | | | | | | | 75 | |
| M5 | | | | | | | | 75 |
| Nacure® 4167 | 4,0 | 4,0 | 4,0 | 4,0 | 4,0 | 4,0 | 4,0 | 4,0 |
| Festkörper in % | 55 | 55 | 55 | 55 | 55 | 55 | 55 | 55 |

Erläuterungen zu Tabelle 4:

Nacure® 4167 = Katalysator auf Basis aminblockierten Phosphorsäureteilester der Firma King Industries, nichtflüchtiger Anteil 25%

Anschließend werden die Materialien elektrostatisch in Keilform auf Coiltafeln, welche mit einem handelsüblichen Wasserbasislack schwarz uni der Firma BASF Coatings AG beschichtet sind, appliziert. Die Applikation erfolgt in zwei Aufträgen, der erste mittels ESTA - Hochrotation und der zweite mittels pneumatischer Applikation. Die Applikationsparameter für die Applikation der jeweiligen Klarlacke sind wie folgt:

| | |
|---|---|
| Substrat | z.B. Coil 500 cm x200 cm |
| Prüfmethode | Konstant |
| Glocke | 33èr (DÜRR) |
| Düse | 1,3 mm |
| Zerstäuber (DÜRR) | ECO-Bell-direkt |
| Objektabstand / cm | 26 |
| Bandgeschwindigkeit (m/min) | 2,7 |
| Hubhöhe - oben | 215 |
| Hubgeschwindigkeit | 0,8 m/s |
| Hochspannung (KV) | 70 |
| Drehzahl (U/min) | 40000 |
| Hubhöhe- unten | 115 |
| Lenkluft (NormLiter) | 240 |

(fortgesetzt)

| | |
|---|---|
| Pumpeneinstellung | 55 (x6=330 ml) |
| Schichtdicke (μ m) | Keil 20 bis 60 μm |
| Ablüftzeit (min) | 10 |
| Temperatur / Feuchte | 23°C / 65% |

Um die Ablaufneigung zu testen, wird ein Keil mit größer werdender Schichtdicke realisiert. Dies erreicht man durch eine vertikale Bewegung des Bleches gegenüber der Glocke während der Applikation. Zur Läuferinduktion sind in definierten Abständen des Bleches Löcher angebracht. Es wird die jeweilige Länge des Läufers in mm in Abhängigkeit der Schichtstärke bestimmt.

Als Läufergrenze werden 10 mm als praxisrelevanter Wert angenommen. Da insgesamt nur ca. 50 μ m Schicht aufgebaut werden, werden diskrete Läuferlängen bestimmt und eine lineare Funktion der Läuferlänge versus Schichtdicke durch Regression ermittelt. Die Extrapolation hin zu einer Läufergrenze von 10 mm ergibt den zugehörigen Schichtdickenwert. Diese Schichtdicken-Werte sind in Tabelle 5 angegeben. Die Filme sind durchweg von optisch exzellenter Qualität.

Tabelle 5: Extrapolierte Schichtdicken-Werte bei einer Läufergrenze von 10 mm

| Beispiel | Härter-Mischung | Extrapolierte Schichtdicken-Werte in μm |
|---|---|---|
| Vgl.bsp. 1 | MV0 | 56 |
| Beispiel 1 | M1 | 69 |
| Vgl.bsp. 2 | MV1 | Nicht appliziert (Gelteilchen) |
| Beispiel 2 | M2 | 80 |
| Vgl.bsp. 3 | MV2 | Nicht appliziert (Gelteilchen) |
| Beispiel 3 | M3 | 65 |
| Beispiel 4 | M4 | 79 |
| Beispiel 5 | M5 | 59 |

Die Ergebnisse der Tabelle 5 zeigen, dass durch Verwendung der erfindungsgemäßen harnstoffhaltigen Verbindung (H1) bzw. (H2) bzw. (H3) bzw. (H4) Beschichtungsmittel mit einer deutlich verbesserten Läuferneigung und durch Verwendung der erfindungsgemäßen harnstoffhaltigen Verbindung (H5) mit einer leicht verbesserten Läuferneigung erhalten werden. Dabei zeichnen sich die erhaltenen erfindungsgemäßen Beschichtungen trotz Verwendung dieser harnstoffhaltigen Verbindungen (H1) bzw. (H2) bzw. (H3) bzw. (H4) bzw. (H5) durch eine sehr hohe Transparenz aus. Auch die übrigen Eigenschaften der Beschichtungen, wie Kratzfestigkeit und Chemikalienbeständigkeit werden nicht verschlechtert. Die Beschichtungsmittel der Vergleichsbeispiele MV1 und MV2 konnten dagegen wegen der Bildung von Gelteilchen nicht appliziert werden.

## Patentansprüche

1. Beschichtungsmittel auf Basis aprotischer Lösemittel, enthaltend mindestens eine hydroxylgruppenhaltige Verbindung (A), mindestens eine, von der Verbindung (H) verschiedene isocyanatgruppenhaltige Verbindung (B) und mindestens eine, von der Verbindung (B) verschiedene, harnstoffgruppenhaltige Verbindung (H), **dadurch gekennzeichnet, dass**

   (i) die harnstoffgruppenhaltige Verbindung (H) mindestens eine Struktureinheit der Formel (I)

$$-NR'''-C(O)-\underset{\underset{H}{|}}{N}-X-SiR''_x(OR')_{3-x} \quad (I),$$

und zusätzlich mindestens eine weitere Struktureinheit aufweist, wobei diese weitere Struktureinheit

(a) mindestens eine Struktureinheit (II) der nachfolgenden Formel (II)

$$-NR'''-C(O)-\underset{\displaystyle R}{\underset{|}{N}}-X-SiR''_x(OR')_{3-x} \qquad (II),$$

oder
(b) mindestens eine Struktureinheit (III) der nachfolgenden Formel (III)

$$-NR'''-C(O)-N(X-SiR''_x(OR')_{3-x})_n(X'-SiR''_y(OR')_{3-y})_m \qquad (III)$$

oder
(c) mindestens eine Struktureinheit (II) der Formel (II) und mindestens eine Struktureinheit (III) der Formel (III)

ist, und
(ii) die harnstoffgruppenhaltige Verbindung (H) erhältlich ist durch Umsetzung einer isocyanatgruppenhaltigen Verbindung (HG) mit aminogruppenhaltigen Verbindungen und
(iii) in der harnstoffgruppenhaltigen Verbindung (H) mehr als 90 Mol-% der ursprünglich in der isocyanatgruppenhaltigen Verbindung (HG) vorhandenen Isocyanatgruppen zu den Struktureinheiten (I) und (II) oder (I) und (III) oder (I) und (II) und (III) umgesetzt worden sind,

wobei in den Formeln (I), (II) und (III)

R''' = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R, R'' = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann,
X, X' = linearer und/oder verzweigter Alkyl- oder Cycloalkylrest mit 1 bis 20 Kohlenstoffatomen,
x = 0 bis 2, y = 0 bis 2 sowie n = 0 bis 2, m = 0 bis 2, m+n = 2 ist.

**2.** Beschichtungsmittel nach Anspruch 1, **dadurch gekennzeichnet, dass** die Verbindung (H) mindestens eine Struktureinheit der Formel (I) und mindestens eine Struktureinheit der Formel (II) und mindestens eine Struktureinheit der Formel (III) aufweist.

**3.** Beschichtungsmittel nach Anspruch 1 oder 2, **dadurch gekennzeichnet, dass** die Verbindung (H)
zwischen 10 und 60 Mol-%, insbesondere zwischen 20 und 50 Mol-%, besonders bevorzugt 30 bis 50 Mol-%, jeweils bezogen auf die Gesamtheit der Struktureinheiten (I), (II) und (III), mindestens einer Struktureinheit der Formel (I) aufweist und
die Summe aus den Struktureinheiten (II) plus Struktureinheiten (III) zwischen 90 und 40 Mol-%, insbesondere zwischen 80 und 50 Mol-%, besonders bevorzugt zwischen 70 und 50 Mol-%, jeweils bezogen auf die Gesamtheit der Struktureinheiten (I), (II) und (III), liegt.

**4.** Beschichtungsmittel nach einem der Ansprüche 1 bis 3, **dadurch gekennzeichnet, dass** in der Verbindung (H) mehr als 95 Mol-%, insbesondere mindestens 98 Mol-% und besonders bevorzugt 100 Mol-% der ursprünglich vorhandenen Isocyanatgruppen zu den Struktureinheiten (I) und (II) oder (I) und (III) oder (I) und (II) und (III) umgesetzt worden sind.

**5.** Beschichtungsmittel nach einem der Ansprüche 1 bis 4, **dadurch gekennzeichnet, dass** die Verbindung (H) herstellbar ist Umsetzung einer isocyanatgruppenhaltigen Verbindung ($H_G$) mit
einem primären Monoalkoxysilylamin (Ia) der Formel (Ia)

H

\

$N\text{-}(X\text{-}SiR''_x(OR')_{3-x})$ (Ia)

/

H

und
mit einem sekundären Monoalkoxysilylamin (IIa) der Formel (IIa)

H

\

$N\text{-}(X\text{-}SiR''_x(OR')_{3-x})$ (IIa)

/

R

und/oder
mit einem Bisalkoxysilylamin (IIIa) der Formel (IIIa)

H

\

$\text{-}N(X\text{-}SiR''_x(OR')_{3-x})_n(X'\text{-}SiR''_y(OR')_{3-y})_m$ (IIIa)

wobei R''', R, R', X, X', R'' x, y, m und n die oben angegebene Bedeutung haben.

6. Beschichtungsmittel nach einem der Ansprüche 1 bis 5, **dadurch gekennzeichnet, dass** die isocyanatgruppenhaltige Verbindung (**$H_G$**) ein Isocyanurat-Trimer eines aliphatischen und/oder eines cycloaliphatischen Diisocyanates, bevorzugt eines aliphatischen Diisocyanates ist.

7. Beschichtungsmittel nach einem der Ansprüche 1 bis 6, **dadurch gekennzeichnet, dass** die Verbindung ($H_G$) ausgewählt ist aus der Gruppe 1,6-Hexamethylendiisocyanat und 4,4'-Methylendicyclohexyldiisocyanat und/oder der Isocyanurat-Trimeren der vorgenannten Polyisocyanate.

8. Beschichtungsmittel nach einem der Ansprüche 1 bis 7, **dadurch gekennzeichnet, dass** das Beschichtungsmittel 1 bis 20 Gew.-%, bevorzugt 5 bis 15 Gew.-%, jeweils bezogen auf die nicht flüchtigen Bestandteile der Komponente (B) des Beschichtungsmittels, mindestens einer harnstoffhaltigen Verbindung (H) enthält.

9. Beschichtungsmittel nach einem der Ansprüche 1 bis 8, **dadurch gekennzeichnet, dass** ein oder mehrere, von der Verbindung (H) verschiedene, Bestandteile des Beschichtungsmittels
mindestens eine Struktureinheit (IV) der Formel (IV)

$$-N-[X-SiR''_x(OR')_{3-x}] \quad (IV)$$

und/oder mindestens eine Struktureinheit (V) der Formel (V)

$$-N(X-SiR''_x(OR')_{3-x})_n(X'-SiR''_y(OR')_{3-y})_m \quad (V)$$

aufweisen, wobei R', X, X', R'' x, y, m und n die oben angegebene Bedeutung haben.

**10.** Beschichtungsmittel nach einem der Ansprüche 1 bis 9, **dadurch gekennzeichnet, dass** zumindest ein Teil der isocyanatgruppenhaltigen Verbindung (B) mindestens eine Struktureinheit der Formel (IV) und mindestens eine Struktureinheit der Formel (V) aufweist.

**11.** Beschichtungsmittel nach Anspruch 10, **dadurch gekennzeichnet, dass** im Polyisocyanat (B) zwischen 0 und 90 Mol-%, der Isocyanatgruppen im Polyisocyanatgrundkörper zu Struktureinheiten (IV) und/oder zwischen 0 und 90 Mol-%, der Isocyanatgruppen im Polyisocyanatgrundkörper zu Struktureinheiten (V) umgesetzt sind und/oder der Gesamtanteil der zu den Struktureinheiten (IV) und (V) umgesetzten Isocyanatgruppen im Polyisocyanatgrundkörper zwischen 0 und 90 Mol% liegt.

**12.** Beschichtungsmittel nach einem der Ansprüche 1 bis 11, **dadurch gekennzeichnet, dass** das Polyol (A) mindestens ein Poly(meth)acrylatpolyol und/oder mindestens einen hydroxyfunktionellen Polyester, bei dem im Mittel mindestens eine Hydroxylfunktion des Polyesters mit mindestens einer Säure ausgewählt aus der Gruppe der isomeren C8- bis C9-Monocarbonsäuren verestert ist, enthält.

**13.** Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 12 aufgetragen wird.

**14.** Effekt- und/oder farbgebende Lackierung aus mindestens einer pigmentierten Beschichtung und einer darauf angeordneten Klarlacklackierung, **dadurch gekennzeichnet, dass** die Klarlacklackierung aus einem Beschichtungsmittel nach einem der Ansprüche 1 bis 12 hergestellt worden ist.

**15.** Verwendung der Beschichtungsmittel nach einem der Ansprüche 1 bis 12 als Klarlack für die Automobilserien-, Nutzfahrzeug- und/oder Reparaturlackierung und/oder zur Beschichtung von Karosserie-Innen- und/oder-Außenbauteilen bzw. Anwendung des Verfahrens nach Anspruch 13 für die Automobilserien-, Nutzfahrzeug- und/oder Reparaturlackierung und/oder zur Beschichtung von Karosserie-Innen- und/oder- Außenbauteilen.

## Claims

**1.** A coating composition based on aprotic solvents, comprising at least one hydroxyl-containing compound (A), at least one isocyanato-containing compound (B) different from the compound (H), and at least one urea-group-containing compound (H) different from the compound (B),
wherein

(i) the urea-group-containing compound (H) has at least one structural unit of the formula (I)

$$-NR'''-C(O)-\underset{\substack{|\\H}}{N}-X-SiR''_x(OR')_{3-x} \quad (I),$$

and additionally at least one other structural unit, said other structural unit being

(a) at least one structural unit (II) of the following formula (II)

$$-NR'''-C(O)-\underset{\displaystyle R}{\underset{|}{N}}-X-SiR''_x(OR')_{3-x} \qquad (II),$$

or

(b) at least one structural unit (III) of the following formula (III)

$$-NR'''-C(O)-N(X-SiR''_x(OR')_{3-x})_n(X'-SiR''_y(OR')_{3-y})_m \ (III)$$

or

(c) at least one structural unit (II) of the formula (II) and at least one structural unit (III) of the formula (III), and

(ii) the urea-group-containing compound (H) is obtainable by reacting an isocyanato-containing compound (HG) with amino-containing compounds, and

(iii) in the urea-group-containing compound (H) more than 90 mol% of the isocyanate groups originally present in the isocyanato-containing compound (HG) have undergone reaction to form the structural units (I) and (II) or (I) and (III) or (I) and (II) and (III),

where, in the formulae (I), (II), and (III) R''' = hydrogen, alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
R, R'' = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
R' = hydrogen, alkyl or cycloalkyl, it being possible for the carbon chain to be interrupted by nonadjacent oxygen, sulfur or NRa groups,
X, X' = linear and/or branched alkyl or cycloalkyl radical having 1 to 20 carbon atoms,
x = 0 to 2, y = 0 to 2, and n = 0 to 2, m = 0 to 2, m+n = 2.

**2.** The coating composition as claimed in claim 1, wherein the compound (H) has at least one structural unit of the formula (I) and at least one structural unit of the formula (II) and at least one structural unit of the formula (III).

**3.** The coating composition as claimed in claim 1 or 2, wherein the compound (H)
has between 10 and 60 mol%, more particularly between 20 and 50 mol%, most preferably 30 to 50 mol%, based in each case on the entirety of the structural units (I), (II), and (III), of at least one structural unit of the formula (I), and the sum of the structural units (II) plus structural units (III) is between 90 and 40 mol%, more particularly between 80 and 50 mol%, most preferably between 70 and 50 mol%, based in each case on the entirety of the structural units (I), (II) and (III).

**4.** The coating composition as claimed in any of claims 1 to 3, wherein, in the compound (H), more than 95 mol%, more particularly at least 98 mol%, and with particular preference 100 mol% of the isocyanate groups originally present have undergone reaction to form the structural units (I) and (II) or (I) and (III) or (I) and (II) and (III).

**5.** The coating composition as claimed in any of claims 1 to 4, wherein the compound (H) is preparable by reacting an isocyanato-containing compound ($H_G$) with a primary monoalkoxysilylamine (Ia) of the formula (Ia)

$$\begin{array}{l} H \\ \quad \backslash \\ \quad\ N-(X-SiR''_x(OR')_{3-x}) \qquad (Ia) \\ \quad / \\ H \end{array}$$

and
with a secondary monoalkoxysilylamine (IIa) of the formula (IIa)

H

\

$$N\text{-}(X\text{-}SiR''_x(OR')_{3-x}) \quad (IIa)$$

/

R

and/or
with a bisalkoxysilylamine (IIIa) of the formula (IIIa)

H

\

$$\text{-}N(X\text{-}SiR''_x(OR')_{3-x})_n(X'\text{-}SiR''_y(OR')_{3-y})_m \quad (IIIa)$$

where R"', R, R' , X, X', R" x, y, m and n are as defined above.

**6.** The coating composition as claimed in any of claims 1 to 5, wherein the isocyanato-containing compound ($H_G$) is an isocyanurate trimer of an aliphatic and/or cycloaliphatic diisocyanate, preferably of an aliphatic diisocyanate.

**7.** The coating composition as claimed in any of claims 1 to 6, wherein the compound ($H_G$) is selected from the group of 1,6-hexamethylene diisocyanate and 4,4'-methylenedicyclohexyl diisocyanate and/or the isocyanurate trimers of the aforementioned polyisocyanates.

**8.** The coating composition as claimed in any of claims 1 to 7, containing 1% to 20%, preferably 5% to 15%, by weight, based in each case on the nonvolatile constituents of its component (B), of at least one urea-containing compound (H).

**9.** The coating composition as claimed in any of claims 1 to 8, wherein one or more constituents of the coating composition that are different from the compound (H)
have at least one structural unit (IV) of the formula (IV)

$$\text{-}N\text{-}\ [X\text{-}SiR''_x(OR')_{3-x}] \quad (IV)$$

and/or at least one structural unit (V) of the formula (V).

$$\text{-}N(X\text{-}SiR''_x(OR')_{3-x})_n(X'\text{-}SiR''_y(OR')_{3-y})_m \quad (V)$$

where R', X, X', R" x, y, m and n are as defined above.

**10.** The coating composition as claimed in any of claims 1 to 9, wherein at least part of the isocyanato-containing compound (B) has at least one structural unit of the formula (IV) and at least one structural unit of the formula (V).

**11.** The coating composition as claimed in claim 10, wherein, in the polyisocyanate (B), between 0 and 90 mol% of the isocyanate groups in the polyisocyanate parent structure have undergone reaction to form structural units (IV) and/or between 0 and 90 mol% of the isocyanate groups in the polyisocyanate parent structure have undergone reaction to form structural units (V), and/or the total fraction of the isocyanate groups in the polyisocyanate parent structure that have undergone reaction to form the structural units (IV) and (V) is between 0 and 90 mol%.

**12.** The coating composition as claimed in any of claims 1 to 11, wherein the polyol (A) comprises at least one poly(meth)acrylate polyol and/or at least one hydroxy-functional polyester in which on average at least one hydroxyl function of the polyester is esterified with at least one acid selected from the group of the isomeric C8 to C9 monocarboxylic acids.

**13.** A multistage coating method which comprises applying a pigmented basecoat film to an optionally precoated substrate and thereafter applying a film of the coating composition as claimed in any of claims 1 to 12.

**14.** An effect and/or color paint system comprising at least one pigmented coating with a clearcoat disposed thereon, wherein the clearcoat has been produced from a coating composition as claimed in any of claims 1 to 12.

**15.** The use of the coating composition as claimed in any of claims 1 to 12 as a clearcoat for automotive OEM finishing, commercial vehicle finishing and/or refinish and/or for coating bodywork components for interior and/or exterior installation, or use of the method as claimed in claim 13 for automotive OEM finishing, commercial vehicle finishing and/or refinish and/or for coating bodywork components for interior and/or exterior installation.

**Revendications**

**1.** Agent de revêtement à base de solvants aprotiques, contenant au moins un composé (A) contenant des groupes hydroxyle, au moins un composé (B), différent du composé (H), contenant des groupes isocyanate et au moins un composé (H), différent du composé (B), contenant des groupes urée, **caractérisé en ce que**

(i) le composé (H) contenant des groupes urée présente au moins une unité structurale de formule (I)

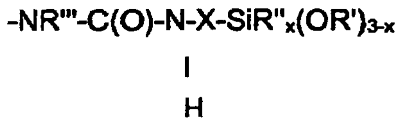
(I),

et en plus au moins une autre unité structurale, cette autre unité structurale étant

(a) au moins une unité structurale (II) de la formule (II) suivante

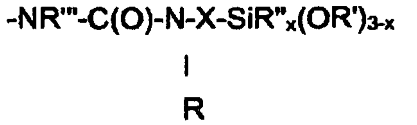
(II),

ou
(b) au moins une unité structurale (III) de la formule (III) suivante

$$-NR'''-C(O)-N(X-SiR''_x(OR')_{3-x})_n(X'-SiR''_y(OR')_{3-y})_m \quad (III)$$

ou
(c) au moins une unité structurale (II) de formule (II) et au moins une unité structurale (III) de formule (III), et

(ii) le composé (H) contenant des groupes urée peut être obtenu par transformation d'un composé ($H_G$) contenant des groupes isocyanate avec des composés contenant des groupes amino et
(iii) dans le composé (H) contenant des groupes urée, plus de 90% en mole des groupes isocyanate présents initialement dans le composé ($H_G$) contenant des groupes isocyanate ont été transformés en unités structurales (I) et (II) ou (I) et (III) ou (I) et (II) et (III),

où, dans les formules (I), (II) et (III)

R'''= hydrogène, alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle,
R, R'' = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle,
R' = hydrogène, alkyle ou cycloalkyle, la chaîne carbonée pouvant être interrompue par des groupes oxygène, soufre ou NRa non adjacents,

X, X' = un radical alkyle linéaire et/ou ramifié ou cycloalkyle, comprenant 1 à 20 atomes de carbone,
x = 0 à 2, y = 0 à 2 et n = 0 à 2, m = 0 à 2, m + n = 2.

2. Agent de revêtement selon la revendication 1, **caractérisé en ce que** le composé (H) présente au moins une unité structurale de formule (I) et au moins une unité structurale de formule (II) et au moins une unité structurale de formule (III).

3. Agent de revêtement selon la revendication 1 ou 2, **caractérisé en ce que** le composé (H)
présente entre 10 et 60% en mole, en particulier entre 20 et 50% en mole, de manière particulièrement préférée 30 à 50% en mole, à chaque fois par rapport à la totalité des unités structurales (I), (II) et (III), d'au moins une unité structurale de formule (I) et
la somme des unités structurales (II) et des unités structurales (III) vaut entre 90 et 40% en mole, en particulier entre 80 et 50% en mole, de manière particulièrement préférée entre 70 et 50% en mole, à chaque fois par rapport à la totalité des unités structurales (I), (II) et (III).

4. Agent de revêtement selon l'une quelconque des revendications 1 à 3, **caractérisé en ce que**, dans le composé (H), plus de 95% en mole, en particulier au moins 98% en mole et de manière particulièrement préférée 100% en mole des groupes isocyanate présents initialement ont été transformés en unités structurales (I) et (II) ou (I) et (III) ou (I) et (II) et (III).

5. Agent de revêtement selon l'une quelconque des revendications 1 à 4, **caractérisé en ce que** le composé (H) peut être préparé par transformation d'un composé ($H_G$) présentant des groupes isocyanate avec une monoalcoxysilylamine primaire (Ia) de formule (Ia)

H
\
$N\text{-}(X\text{-}SiR''_x(OR')_{3-x})$ (Ia)
/
H

et avec une monoalcoxysilylamine secondaire (IIa) de formule (IIa)

H
\
$N\text{-}(X\text{-}SiR''_x(OR')_{3-x})$ (IIa)
/
R

et/ou avec une bisalcoxysilylamine (IIIa) de formule (IIIa)

H
\
$\text{-}N(X\text{-}SiR''_x(OR')_{3-x})_n(X'\text{-}SiR''_y(OR')_{3-y})_m$ (IIIa)

R"', R, R', X, X', R", x, y, m et n présentant la signification indiquée ci-dessus.

6. Agent de revêtement selon l'une quelconque des revendications 1 à 5, **caractérisé en ce que** le composé ($H_G$) contenant des groupes isocyanate est un trimère d'isocyanurate d'un diisocyanate aliphatique et/ou cycloaliphatique, de préférence d'un diisocyanate aliphatique.

7. Agent de revêtement selon l'une quelconque des revendications 1 à 6, **caractérisé en ce que** le composé ($H_G$) est choisi dans le groupe formé par le diisocyanate de 1,6-hexaméthylène et le diisocyanate de 4,4'-méthylènedicyclohexyle et/ou les trimères d'isocyanurate des polyisocyanates susmentionnés.

8. Agent de revêtement selon l'une quelconque des revendications 1 à 7, **caractérisé en ce que** l'agent de revêtement contient 1 à 20% en poids, de préférence 5 à 15% en poids, à chaque fois par rapport aux constituants non volatils du composant (B) de l'agent de revêtement, d'au moins un composé (H) contenant de l'urée.

9. Agent de revêtement selon l'une quelconque des revendications 1 à 8, **caractérisé en ce qu'**un ou plusieurs constituants, différents du composé (H) de l'agent de revêtement présente(nt) au moins une unité structurale (IV) de formule (IV)

$$-N-[X-SiR''_x(OR')_{3-x}] \qquad (IV)$$

et/ou au moins une unité structurale (V) de formule (V)

$$-N(X-SiR''(OR')_{3-x})_n(X'-SiR''_y(OR')_{3-y})_m \qquad (V)$$

R', X, X', R'', x, y, m et n présentant la signification indiquée ci-dessus.

10. Agent de revêtement selon l'une quelconque des revendications 1 à 9, **caractérisé en ce qu'**au moins une partie du composé (B) contenant des groupes isocyanate présente au moins une unité structurale de formule (IV) et au moins une unité structurale de formule (V).

11. Agent de revêtement selon la revendication 10, **caractérisé en ce que**, dans le polyisocyanate (B), entre 0 et 90% en mole des groupes isocyanate dans le corps de base polyisocyanate sont transformés en unités structurales (IV) et/ou entre 0 et 90% en mole des groupes isocyanate dans le corps de base polyisocyanate sont transformés en unités structurales (V) et/ou la proportion totale des groupes isocyanate dans le corps de base polyisocyanate transformés en unités structurales (IV) et (V) se situe entre 0 et 90% en mole.

12. Agent de revêtement selon l'une quelconque des revendications 1 à 11, **caractérisé en ce que** le polyol (A) contient au moins un poly(méth)acrylate-polyol et/ou au moins un polyester à fonctionnalité hydroxy, dans lequel en moyenne au moins une fonction hydroxyle du polyester est estérifiée par au moins un acide choisi dans le groupe des acides C8-C9-monocarboxyliques isomères.

13. Procédé de revêtement à plusieurs étapes, **caractérisé en ce qu'**on applique, sur un substrat le cas échéant revêtu au préalable, une couche de laque de base pigmentée, puis une couche de l'agent de revêtement selon l'une quelconque des revendications 1 à 12.

14. Laquage conférant un effet et/ou une couleur constitué par au moins un revêtement pigmenté et un laquage de laque claire disposé sur celui-ci, **caractérisé en ce que** le laquage de laque claire a été préparé à partir d'un agent de revêtement selon l'une quelconque des revendications 1 à 12.

15. Utilisation de l'agent de revêtement selon l'une quelconque des revendications 1 à 12 comme laque claire pour le laquage en série de voitures, le laquage de véhicules utilitaires et/ou le laquage de réparation et/ou pour le revêtement de pièces internes et/ou externes de carrosseries ou utilisation du procédé selon la revendication 13 pour le laquage en série de voitures, le laquage de véhicules utilitaires et/ou le laquage de réparation et/ou pour le revêtement de pièces internes et/ou externes de carrosseries.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1273640 A
- DE 10060327 A
- WO 08074491 A
- DE 2751761 A
- EP 192304 A
- EP 198519 A
- WO 05005558 A
- WO 02098943 A
- WO 061313 A
- WO 2008074491 A
- WO 06131314 A
- US 4598131 A
- EP 0626888 A
- EP 0692007 A
- EP 0994117 A
- WO 08148555 A
- WO 0109260 A
- WO 06042585 A
- DE 102005045228 A
- DE 102007061854
- US 4710542 A
- EP 0245700 B
- WO 9422968 A
- EP 0276501 A
- EP 0249201 A
- WO 9712945 A
- EP 0008127 A


### In der Beschreibung aufgeführte Nicht-Patentliteratur


- **VON B. SINGH ; MITARBEITER.** Carbamylmethylated Melamines, Novel Crosslinkers for the Coatings Industry. *in Advanced Organic Coatings Science and Technology Series,* 1991, vol. 13, 193-207
- Römpp Lexikon »Lacke und Druckfarben. Georg Thieme Verlag, 1998, 250-252